# EUROPÄISCHE PATENTANMELDUNG

(11) **EP 3 715 230 A1**
(43) Veröffentlichungstag der Anmeldung: **30.09.2020**
(21) Anmeldenummer: 19170737.1
(22) Anmeldetag: 24.04.2019
(51) Int. Cl.: B62D 65/18, B05D 3/00, B65G 17/12, B65G 69/20

(54) **BEHANDLUNGSANLAGE ZUM BEHANDELN VON WERKSTÜCKEN**

(30) Priorität: 25.04.2018 DE 102018109934
(71) Anmelder: Eisenmann SE, 71032 Böblingen (DE)
(72) Erfinder: Gümbel, Urs, 72622 Nürtingen (DE); Riegraf, Martin, 72766 Reutlingen (DE)
(74) Vertreter: Ostertag & Partner Patentanwälte mbB

(57) **Zusammenfassung**

Eine Behandlungsanlage zum Behandeln von Werkstücken (12), insbesondere zum Behandeln von Fahrzeugkarosserien (14), umfasst eine Behandlungseinrichtung (16) mit einem Gehäuse (18), welches einen Behandlungsraum (19) definiert. Ein Fördersystem (32) umfasst eine Vielzahl von Transportwagen (34), mittels denen die Werkstücke (12) durch den Behandlungsraum (19) förderbar sind, wobei jeder Transportwagen (34) ein Fahrwerk (40) und eine Befestigungseinrichtung (50) für zumindest ein Werkstück (12) umfasst, die mittels einer Verbindungseinrichtung (56) miteinander gekoppelt sind. Außerhalb des Behandlungsraumes (19) ist ein Fahrraum (64) für das Fahrwerk (40) vorhanden, der durch einen Verbindungsdurchgang (72) in Richtung nach oben mit dem Behandlungsraum (19) verbunden ist, derart, dass das Fahrwerk (40) in dem Fahrraum (64) bewegbar ist, wobei die Befestigungseinrichtung (50) im Behandlungsraum (19) mitgeführt wird und sich die Verbindungseinrichtung (56) durch den Verbindungsdurchgang (72) hindurch erstreckt. Im Behandlungsraum (20) ist eine Abdeckeinrichtung (74) vorhanden, die zumindest ein begehbares Abdeckelement (76) umfasst, welches zwischen einer Begehstellung, in welcher es den Verbindungsdurchgang (72) abdeckt, und einer Freigabestellung, in welcher es von der Verbindungseinrichtung (56) eines der Transportwagen (34) passiert werden kann, beweglich ist.

## Beschreibung

Die Erfindung betrifft eine Behandlungsanlage zum Behandeln von Werkstücken, insbesondere zum Behandeln von Fahrzeugkarosserien, mit
a) einer Behandlungseinrichtung mit einem Gehäuse, welches einen Behandlungsraum mit einem Boden definiert;
b) einem Fördersystem, welches eine Vielzahl von Transportwagen umfasst, mittels denen die Werkstücke durch den Behandlungsraum förderbar sind, wobei jeder Transportwagen ein Fahrwerk und eine Befestigungseinrichtung für zumindest ein Werkstück umfasst, die mittels einer Verbindungseinrichtung miteinander gekoppelt sind;
   wobei
c) außerhalb des Behandlungsraumes ein Fahrraum für das Fahrwerk vorhanden ist, der durch einen Verbindungsdurchgang in Richtung nach oben mit dem Behandlungsraum verbunden ist, derart, dass das Fahrwerk in dem Fahrraum bewegbar ist, wobei die Befestigungseinrichtung im Behandlungsraum mitgeführt wird und sich die Verbindungseinrichtung durch den Verbindungsdurchgang hindurch erstreckt.

Bei solchen Behandlungseinrichtungen gibt es in einer Tunnelwand, welche den Behandlungsraum von dem Führungsbereich trennt, entsprechend einen Verbindungsdurchgang, durch welchen sich zumindest die Verbindungseinrichtung eines Transportwagens hindurch erstreckt.

Bei der Behandlungseinrichtung kann es sich insbesondere um eine Arbeitsstation, einen Trockner oder eine Beschichtungskabine handeln, wobei der Behandlungsraum bei einem Trockner oder einer Beschichtungskabine in der Regel als Behandlungstunnel konzipiert ist; dies wird weiter unten nochmals erläutert.

Bei vom Markt her bekannten derartigen Behandlungsanlagen bildet der Bereich um den Verbindungsdurchgang oder der Verbindungsdurchgang als solcher für Personen, die sich im Betrieb oder in einer Stillstandphase der Behandlungseinrichtung in dem Behandlungsraum aufhalten, eine Gefahrenquelle für Unfälle dar, insbesondere ist der Verbindungsdurchgang für solche Personen eine Stolperfalle. Dies ist besonders bei Arbeitsstationen, in denen beispielsweise Montagearbeiten oder Maßnahmen zur Qualitätssicherung durchgeführt werden und bei denen Werker den Verbindungsdurchgang häufig überqueren müssen, von Relevanz.

Es ist daher Aufgabe der Erfindung, eine Behandlungsanlage der eingangs genannten Art bereitzustellen, welche eine verbesserte Betriebssicherheit für Personen bietet.

Diese Aufgabe wird dadurch gelöst, dass
d) im Behandlungsraum eine Abdeckeinrichtung vorhanden ist, die zumindest ein begehbares Abdeckelement umfasst, welches zwischen einer Begehstellung, in welcher es den Verbindungsdurchgang abdeckt, und einer Freigabestellung, in welcher es von der Verbindungseinrichtung eines der Transportwagen passiert werden kann, beweglich ist.

Die Erfindung beruht auf der Erkenntnis, dass es möglich ist, den Verbindungsdurchgang einerseits begeh- und trittsicher abzudecken, ohne andererseits die Durchfahrt eines Transportwagens zu behindern.

Dabei kann das Abdeckelement flexibel und unbeweglich befestigt sein oder flexibel und beweglich gelagert sein oder starr und beweglich gelagert sein. Bei einem oder mehreren Abdeckelementen, die flexibel sind, kann dennoch eine ausreichende Trittsicherheit in der Begehstellung gewährleistet sein.

Vorzugsweise ist das Abdeckelement um eine horizontale Schwenkachse verschwenkbar gelagert. So kann das Abdeckelement nach oben in den Behandlungstunnel verschwenkt werden.

Besonders bevorzugt umfasst die Abdeckeinrichtung mehrere Abdeckelemente, die in Längsrichtung des Behandlungsraumes aneinander angrenzend oder voneinander beabstandet angeordnet sind. Aneinander angrenzend bedeutet im Rahmen der vorliegenden Erfindung, dass durchaus ein Abstand zwischen zwei benachbarten Abdeckelementen vorhanden sein kann, so lange dieser Abstand bzw. der daraus resultierende Zwischenraum zwischen zwei benachbarten Abdeckelementen nicht seinerseits eine Gefahrenquelle, insbesondere eine Stolperfalle, für Personen im Behandlungsraum bildet.

Es kann von Vorteil sein, wenn mehrere aneinander angrenzende Abdeckelemente eine Abdeckelement-Gruppe bilden. Diese Abdeckelement-Gruppe definiert dann einen Übergangsbereich, in dem der Verbindungsdurchgang gefahrlos überquert werden kann. Es können eine oder mehrere solcher Abdeckelement-Gruppen vorhanden sein.

Es ist günstig, wenn eines oder mehrere Abdeckelemente eine Erstreckung in Längsrichtung des Behandlungsraumes von etwa 10 cm bis etwa 20 cm, vorzugsweise von etwa 15 cm, oder von etwa 50 cm bis etwa 100 cm haben. Hierauf wird weiter unten nochmals eingegangen.

Der Verbindungsdurchgang kann geradlinig oder gewinkelt sein.

Es ist vorteilhaft, wenn die Verbindungseinrichtung wenigstens eine Strebe mit wenigstens einem Abschnitt umfasst, der zu dem Verbindungsdurchgang komplementär ist. Diese Strebe erstreckt sich dann aus dem Fahrraum durch den Verbindungsdurchgang in den Behandlungsraum.

Es ist von besonderem Vorteil, wenn die Transportwagen jeweils eine Verstelleinrichtung mit sich führen, durch welche das oder die Abdeckelemente der Abdeckeinrichtung von ihrer Begehstellung in ihre Freigabestellung bewegbar sind, wenn der Transportwagen durch die Behandlungseinrichtung bewegt wird.

Dabei umfasst die Verstelleinrichtung bevorzugt wenigstens eine Verstellstruktur, welche der Verbindungseinrichtung in Bewegungsrichtung des Transportwagens vorauseilt.

Durch den Verbindungsdurchgang kann es zu einem Übertreten der Atmosphäre des Behandlungsraumes in den Fahrraum kommen. Insbesondere bei Trocknern ist diese Atmosphäre mit Lösemittel belastet, welches dann in dem in der Regel kühleren Fahrraum auskondensieren und sich auf den Komponenten der Fördertechnik in dem Fahrraum niederschlagen kann. Dies greift jedoch das Fördersystem an. Um zu verhindern, dass Atmosphäre aus dem Behandlungsraum durch den Verbindungsdurchgang in den Fahrraum strömen kann und dort die Fahrwerke der Transportwagen angreift, ist vorzugsweise eine Abschirmeinrichtung vorgesehen, durch welche ein Kontakt wenigstens der Fahrwerke der Transportwagen mit der Atmosphäre des Behandlungsraumes durch den Verbindungsdurchgang hindurch zumindest vermindert wird.

Die Abschirmeinrichtung umfasst vorzugsweise eine Vielzahl von überlappend angeordneten Dichtlamellen, welche derart angeordnet und eingerichtet sind, dass sie durch die Verstelleinrichtung nach oben gedrückt werden, wenn der Transportwagen sich durch die Behandlungseinrichtung bewegt.

Ausführungsbeispiele der Erfindung werden nun anhand der Zeichnungen näher erläutert. In diesen zeigen.
- Figur 1: schematisch einen Teilquerschnitt einer Behandlungsanlage entlang der gewinkelten Schnittlinie I-I in Figur 3, mit einem Behandlungsraum und einem außerhalb des Behandlungsraumes angeordneten Fahrraum für ein Transportsystem, der über eine Durchgangsverbindung mit dem Behandlungsraum verbunden ist, wobei ein begehbares Abdeckelement in einer Freigabestellung gezeigt ist;
- Figur 2: eine Detailansicht eines Schnittes der Durchgangsverbindung zwischen dem Behandlungsraum und dem Fahrraum mit dem Abdeckelement gemäß dem Ausschnitt II in Figur 1;
- Figur 3: einen Längsschnitt eines Abschnitts der Behandlungsanlage gemäß der Schnittlinie III-III in Figur 1;
- Figur 4: eine Detailansicht gemäß dem Ausschnitt IV in Figur 3 entlang der Schnittlinie IV-IV in Figur 2;
- Figur 5: einen der Figur 1 entsprechenden Schnitt der Behandlungsanlage mit dem Abdeckelement in einer Begehstellung;
- Figur 6: eine der Figur 2 entsprechende Detailansicht mit dem Abdeckelement in der Begehstellung gemäß Figur 5;
- Figur 7: eine der Figur 6 entsprechende Detailansicht mit einer Variante einer Abschirmeinrichtung;
- Figur 8: eine wieder der Figur 2 entsprechende Detailansicht mit dem Abdeckelement in seiner Freigabestellung, welche die Variante der Abschirmeinrichtung.

Die Figuren illustrieren schematisch eine insgesamt mit 10 bezeichnete Behandlungsanlage zur Behandlung von Werkstücken 12, welche beispielhaft als Fahrzeugkarosserien 14 veranschaulicht sind.

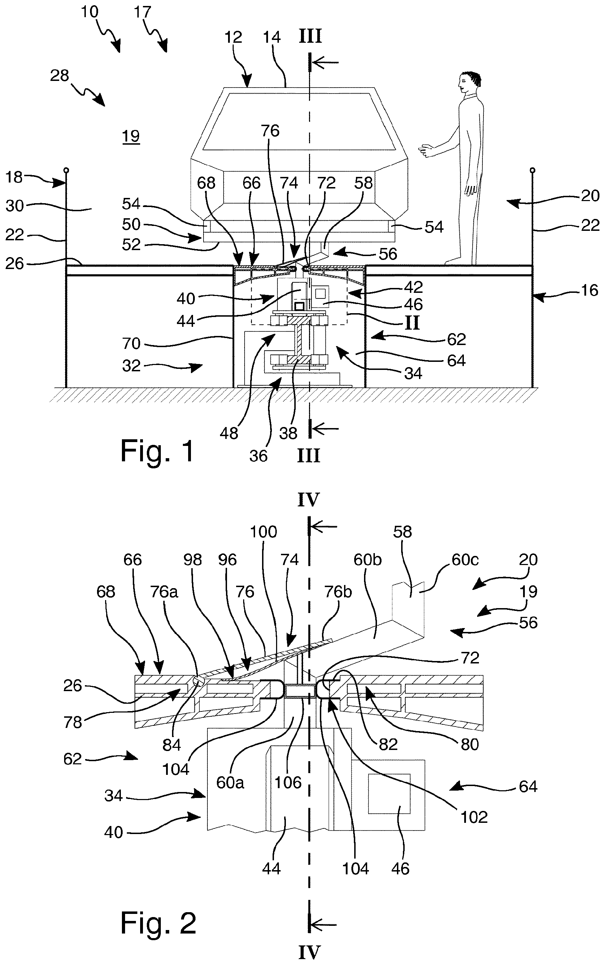

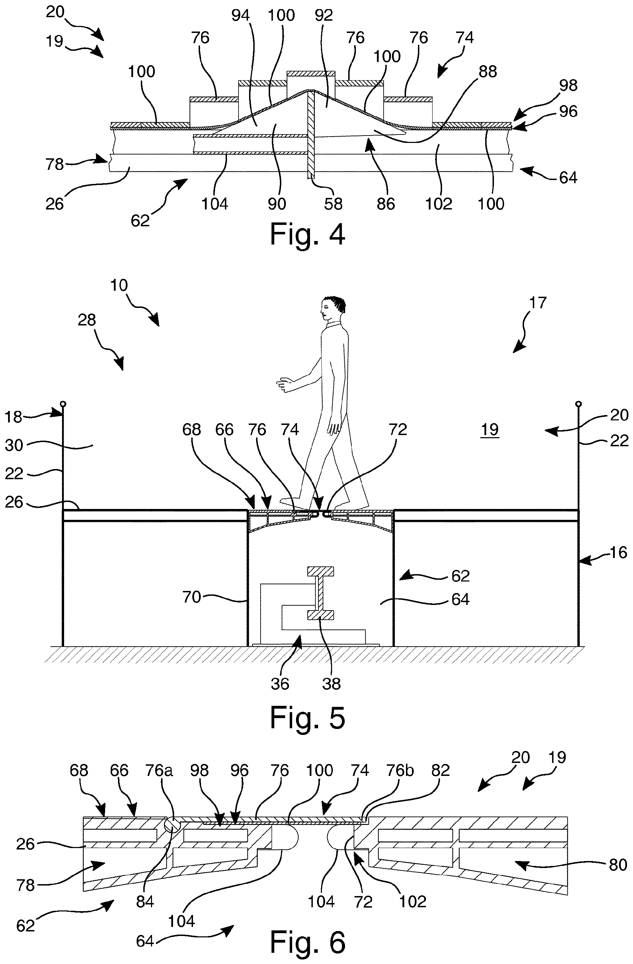

Die Behandlungsanlage 10 umfasst eine Behandlungseinrichtung 16 mit einem Gehäuse 18, welches einen Behandlungsraum 19 definiert. Bei einem bevorzugten Ausführungsbeispiel ist die Behandlungseinrichtung 16 eine Arbeitsstation 17, in welcher Montagearbeiten, Qualitätskontrollarbeiten oder dergleichen vorgenommen werden und bei welcher der Behandlungsraum 19 nach oben offen sein kann, wie es die Figuren 1 und 5 veranschaulichen.

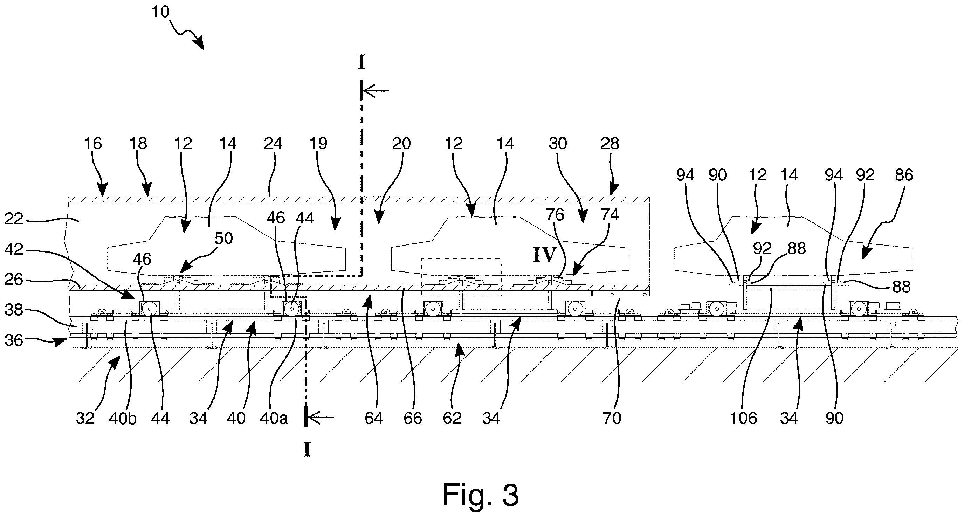

Im Folgenden wird die Erfindung allerdings am Beispiel einer Behandlungseinrichtung 16 erläutert, bei welcher der Behandlungsraum 19 als Behandlungstunnel 20 ausgebildet ist und zwei Tunnelwände in Form von Seitenwänden 22 sowie zwei weitere Tunnelwände in Form einer Decke 24, die nur in Figur 3 gezeigt ist, und eines Bodens 26 umfasst. Unabhängig von seiner konkreten Ausbildung, d.h. ob offen oder geschlossen, hat der Behandlungsraum 19 in jedem Fall einen Boden 26; im Zusammenhang mit dem Behandlungstunnel 20 wird dieser im Weiteren als Tunnelboden 26 bezeichnet.

Eine solche Behandlungseinrichtung 16 kann insbesondere ein Trockner 28 sein, bei dem der Behandlungstunnel 20 einen Trockentunnel 30 vorgibt. Eine solche Behandlungseinrichtung 16 kann auch eine Beschichtungseinrichtung mit einem entsprechenden Behandlungstunnel sein, in dem die Werkstücke 12 insbesondere automatisch mit Hilfe von Lackierrobotern oder manuell lackiert werden.

Die Werkstücke 12 werden mit einem Fördersystem 32 durch den Behandlungsraum 19, d.h. hier den Behandlungstunnel 20 der Behandlungseinrichtung 16 hindurch gefördert. Die Behandlungseinrichtung 16 wird im Durchlauf betrieben und hat dementsprechend an einem stirnseitigen Ende einen Eingang und am gegenüberliegenden stirnseitigen Ende einen Ausgang, wobei der Ausgang in Figur 3 zu erkennen ist und das Bezugszeichen 20a trägt. Der Behandlungsraum 19 kann aber auch als Batch-System ausgelegt sein und gegebenenfalls nur einen einzigen Zugang haben, über den die Werkstücke 12 in den Behandlungsraum 19 hinein und nach der Behandlung auch wieder aus diesem heraus gefördert werden.

Das Fördersystem 32 umfasst eine Vielzahl von Transportwagen 34, auf denen die Werkstücke 12 transportiert werden. Die Transportwagen 34 werden auf einem Schienensystem 36 verfahren. Bei einer nicht eigens gezeigten Abwandlung können die Transportwagen 34 als freifahrende Transportwagen im Sinne von fahrerlosen Transportsystemen ausgebildet sein, die dem Fachmann als sogenannte FTS geläufig sind.

Das vorliegende Schienensystem 36 ist einspurig ausgebildet und umfasst eine Tragschiene 38, auf welcher ein Transportwagen 34 verfährt und welche beim vorliegenden Ausführungsbeispiel als an und für sich bekanntes I-Profil ausgebildet ist. Aber auch andere Profile sind möglich. Das Schienensystem 36 kann auch mehrspurig, insbesondere zweispurig sein. Die Tragschiene 38 ist bodengebunden und am Boden der Anlage 10 verankert.

Jeder Transportwagen 34 umfasst ein Fahrwerk 40 und ein Antriebssystem 42, welche beim vorliegenden Ausführungsbeispiel zwei Antriebsrollen 44 umfasst, die an der Tragschiene 38 ablaufen und jeweils mittels eines Antriebsmotors 46 angetrieben werden können. Die Transportwagen 34 sind auf diese Weise unabhängig voneinander antreibbar. Beim vorliegenden Ausführungsbeispiel laufen die Antriebsrollen 44 auf der Oberseite der Tragschiene 38 ab. Bei einer Abwandlung können die Antriebsrollen 44 auch seitlich an der Tragschiene 38 angreifen.

Zusätzlich zu oder anstelle von den hier erläuterten Transportwagen 34 mit jeweils einem eigenem mitgeführten Antriebssystem 42 können gegebenenfalls auch andere Transportwagen vorhanden sein, welche durch ein zentrales Antriebssystem angetrieben werden. Beispielsweise kann ein solches zentrales Antriebssystem durch einen Kettenzug oder dergleichen ausgebildet sein. Die hier erläuterten Transportwagen 34 können entsprechend auch unabhängig von anderen Antriebseinrichtungen angetrieben und verfahren werden.

Um zu verhindern, dass der Transportwagen 34 in Transportrichtung oder quer zur Transportrichtung verkippt, ist ein Stützsystem 48 mit Stützrollen vorgesehen, die an der Tragschiene 38 anliegen und in an und für sich bekannter Art und Weise ein entsprechendes Verkippen des Transportwagens 34 verhindern.

Der Transportwagen 34 umfasst eine Befestigungseinrichtung 50, an welche ein Werkstück 12 oder ein entsprechender Werkstückträger für Werkstücke 12 befestigt werden kann. Für die Befestigung von Fahrzeugkarosserien 14 umfasst die Befestigungseinrichtung 50 beim vorliegenden Ausführungsbeispiel ein Tragprofil 52 mit Lagerbolzen 54, die in an und für sich bekannter Art und Weise mit Gegenelementen an der Fahrzeugkarosserie 14 zusammenarbeiten, so dass die Fahrzeugkarosserie 14 an der Befestigungseinrichtung 50 fixiert werden kann. Die Befestigungseinrichtung 50 kann auch mehrere Sätze von solchen Lagerbolzen 54 aufweisen, die an unterschiedliche Fahrzeugkarosserien 14 mit verschiedenen Abmessungen und Ausgestaltungen angepasst sind, so dass die Befestigungseinrichtung 50 flexibel für unterschiedliche Fahrzeugkarosserietypen genutzt werden kann. Die Befestigungseinrichtung 50 nimmt eine Fahrzeugkarosserie 14 somit unmittelbar auf, ohne dass die Fahrzeugkarosserie 10 auf einem Werkstückträger, wie beispielsweise einem an und für sich bekannten Skid, befestigt ist.

Das Fahrwerk 40 des Transportwagens 34 ist mittels einer Verbindungseinrichtung 56 mit der Befestigungseinrichtung 50 gekoppelt. Die Verbindungseinrichtung 56 umfasst wenigstens eine nach oben weisende Strebe 58, wobei beim vorliegenden Ausführungsbeispiel aus Stabilitätsgründen zwei solche Streben 58 vorhanden sind, wie in Figur 3 zu erkennen ist. Jede vorhandene Strebe 58 koppelt das Fahrwerk 40 des Transportwagens 34 mit der Befestigungseinrichtung 50.

Jede Strebe 58 hat beim vorliegenden Ausführungsbeispiel einen unteren vertikalen Abschnitt 60a, einen demgegenüber nach oben geneigten mittleren Abschnitt 60b und einen wieder vertikalen oberen Abschnitt 60c, wobei der untere Abschnitt 60a mit dem Fahrwerk 40 des Transportwagens 34 und der obere Abschnitt 60c mit der Befestigungseinrichtung 50 verbunden ist. Wenn der Transportwagen 54 sich in dem Fahrraum 64 befindet, verläuft der mittlere Abschnitt 60b der Strebe 58 in Richtung auf eine Seitenwand 22 des Behandlungstunnels 20.

Der Transportwagen 34 kann derart ausgebildet sein, dass er in der Lage ist, Kurvenabschnitte der Tragschiene 38 zu durchfahren. Hierfür kann das Fahrwerk 40 des Transportwagens 34 insbesondere mit einer Vorläufereinheit 40a und einer Nachläufereinheit 40b konzipiert sein, die gelenkig miteinander verbunden sind und jeweils eine Strebe 58 mit sich führen. Dies ist ebenfalls in Figur 3 veranschaulicht.

Wenn der Transportwagen 34 für Kurvenfahrten ausgelegt ist, ist auch die Kopplung zwischen dem Fahrwerk 40 und der Befestigungseinrichtung 50 durch die Verbindungseinrichtung 56 so eingerichtet, dass entsprechende Kurvenfahrten möglich sind. Hierfür sind die Streben 58 beispielsweise mit Drehgelenken versehen, die es ermöglichen, dass die Befestigungseinrichtung 50 um eine vertikale Drehachse gegenüber dem Fahrwerk 40 des Transportwagens 34 verschwenken kann. Wenn alternativ oder ergänzend Steigungs- oder Gefällefahrten möglich sein sollen, ist die Befestigungseinrichtung 50 hierfür über horizontale Schwenkachsen mit dem Fahrwerk 40 gekoppelt.

Die Behandlungseinrichtung 16 und das Fördersystem 32 sind so aufeinander abgestimmt, dass sich nur ein Teil des Fördersystems 32 in dem Behandlungsraum 19, d.h. in dem Behandlungstunnel 20 bewegt, während der andere Teil des Fördersystems 32 außerhalb des Behandlungstunnels 20 bewegt wird.

Hierfür ist außerhalb des Behandlungsraumes 19 ein Führungsbereich 62 mit einem ebenfalls außerhalb des Behandlungsraumes 19 angeordneten Fahrraum 64 vorgesehen, in dem das Schienensystem 36 untergebracht ist und in welchem sich das Fahrwerk 40 eines jeweiligen Transportwagens 34 bewegt, wobei der Behandlungsraum 19 und der Führungsbereich 62 bzw. der Fahrraum 64 nach oben durch eine Trennwand 66 getrennt sind. Beim vorliegenden Ausführungsbeispiel ist diese Trennwand 66 ein Abschnitt 68 des Tunnelbodens 26, wobei der Führungsbereich 62 mit dem Fahrraum 64 unterhalb des Tunnelbodens 26 angeordnet ist.

Eine Anordnung des Führungsbereichs 62 bzw. des Fahrraums 64 "außerhalb" des Behandlungsraumes 19 ist so zu verstehen, dass es eine strukturelle Trennung zwischen dem Behandlungsraum 19 und dem Führungsbereich 62 und dem Fahrraum 64 durch die angesprochene Trennwand 66 gibt. Dies bedeutet jedoch nicht, dass der Führungsbereich 62 und gegebenenfalls der Fahrraum 64 nicht zumindest bereichsweise in den Behandlungsraum 19 hineinragen können und im Querschnitt mit dem Behandlungsraum 19 überlappen können.

Der Fahrraum 64 kann zur Umgebung der Behandlungseinrichtung 16 hin offen sein; jedenfalls muss kein eigenes Gehäuse für den Fahrraum 64 vorhanden sein. Beim vorliegenden Ausführungsbeispiel ist der Fahrraum 64 jedoch durch ein eigenes Fahrraumgehäuse 70 begrenzt, welches die Trennwand 66 umfasst. Anders ausgedrückt ist also beim vorliegenden Ausführungsbeispiel der Abschnitt 68 des Tunnelbodens 26 ein Teil des Fahrraumgehäuses 70. Alternativ können sich auch die Seitenwände 22 des Gehäuses 18 nach unten über den Tunnelboden 26 hinaus erstrecken, so dass sie den Fahrraum 64 seitlich begrenzen; in diesem Fall ist dieser Fahrraum 64 dann nach oben durch den gesamten Tunnelboden 26 von dem Behandlungstunnel 20 getrennt.

Der Fahrraum 64 ist nun über einen Verbindungsdurchgang 72 in der Trennwand 66 mit dem Behandlungsraum 19 verbunden. Der Verbindungsdurchgang 72 ist komplementär zu der Verbindungseinrichtung 56 der Transportwagen 34.

Die Verbindungseinrichtung 56 erstreckt sich durch den Verbindungsdurchgang 72 hindurch, so dass sich die Befestigungseinrichtung 50 mit dem Werkstück 12 in dem Behandlungsraum 19 und sich das Fahrwerk 40 eines Transportwagens 34 in dem Fahrraum 64 befinden.

Beim vorliegenden Ausführungsbeispiel ist der Verbindungsdurchgang 72 geradlinig und als geradliniger Durchgangsschlitz oder -spalt ausgebildet, durch den sich die jeweils unteren Abschnitte 60a der Streben 58 der Verbindungseinrichtung 56 hindurch erstrecken. Der Verbindungsdurchgang 72 kann auch gewinkelt, d.h. im Querschnitt zum Beispiel labyrinthartig ausgebildet sein, wobei dann die Streben 58 dazu komplementär ausgebildet sind. Bei den hier erläuterten Streben 58 mit den Abschnitten 60a, 60b und 60c ist dann vor allem der untere Abschnitt 60a der Streben 58 komplementär zu einem solchen gewinkelten Verbindungsdurchgang 72 ausgebildet.

Wie eingangs erwähnt, stellt der Verbindungsdurchgang 72 für Personen, die sich in dem Behandlungsraum 19, d.h. hier dem Behandlungstunnel 20, aufhalten, sei es im Betrieb oder in einer Stillstandphase der Behandlungseinrichtung 16, eine Gefahrenquelle für Unfälle dar, insbesondere ist der Verbindungsdurchgang 72 für solche Personen eine Stolperfalle.

Aus diesem Grund ist im Behandlungstunnel 20 eine Abdeckeinrichtung 74 vorhanden, die zumindest ein begehbares Abdeckelement 76 umfasst, welches zwischen einer Begehstellung, in welcher es den Verbindungsdurchgang 72 abdeckt, und einer Freigabestellung, in welcher es von der Verbindungseinrichtung 56 des Transportwagens 34 passiert werden kann, beweglich ist. Die Figuren 5 und 6 zeigen ein Abdeckelement 76 in seiner Begehstellung, die Figuren 1 und 2 zeigen ein Abdeckelement 76 in seiner Freigabestellung und die Figuren 3 und 4 zeigen sowohl Abdeckelemente 76 in ihrer Begehstellung als auch Abdeckelemente 76 in ihrer Freigabestellung.

Bei dem hier beschriebenen Ausführungsbeispiel umfasst die Abdeckeinrichtung 74 eine Vielzahl von Abdeckelementen 76 mit einem Befestigungsende 76a und einem gegenüberliegenden Auflageende 76b. Die Abdeckelemente 76 sind in Längsrichtung des Behandlungstunnels 20 aneinander angrenzend angeordnet. Wie eingangs erläutert, bedeutet aneinander angrenzend, dass ein Abstand zwischen zwei benachbarten Abdeckelementen 76 vorhanden sein kann, so lange dieser Abstand bzw. der daraus resultierende Zwischenraum zwischen zwei benachbarten Abdeckelementen 76 nicht seinerseits eine Gefahrenquelle, insbesondere eine Stolperfalle, für Personen im Behandlungstunnel 20 bildet. Ein solcher Abstand kann beispielsweise noch bis zu 2 cm betragen. Bei einem Abstand zwischen 1 mm und 5 mm ist eine Stolperfalle verhältnismäßig sicher verhindert.

Jedes Abdeckelement 76 ist an seinem Befestigungsende 76a auf einer ersten Seite 78 des Verbindungsdurchgangs 72 am Tunnelboden 26 befestigt. Das Abdeckelement 76 ist insbesondere plattenförmig und in diesem Fall vorzugsweise parallel zu einer horizontalen Ebene angeordnet, wenn es seine Begehstellung einnimmt, in der es den Verbindungsdurchgang 72 überbrückt.

Auf der zweiten, bezogen auf den Verbindungdurchgang 72 gegenüberliegenden Seite 80 des Tunnelbodens 26 ist eine Stützstruktur 82 ausgebildet, auf welcher jedes Abdeckelement 76 in der Begehstellung mit seinem Auflageende 76b aufliegt und von welcher es in seiner Freigabestellung gelöst ist. Diese Stützstruktur 82 ist beim vorliegenden Ausführungsbeispiel als abgesenkte Stufe am Rand des Tunnelbodens 26 ausgebildet. Jedes Abdeckelement 76 ist in der Begehstellung vorzugsweise so angeordnet, dass zu beiden Seiten des Verbindungsdurchgangs 72 von dem Abdeckelement 76 und zu dem Tunnelboden 26, oder allgemein ausgedrückt zu der Trennwand 66 zwischen dem Fahrraum 64 und dem Behandlungstunnel 20, einen Übergang gibt, der weitgehend kein Vorsprünge, Erhebungen oder sonstige Unregelmäßigkeiten aufweist, wie dies Figur 6 veranschaulicht.

Die Abdeckelemente 76 sind beim vorliegenden Ausführungsbeispiel starr und an dem Ort ihrer Befestigung an der ersten Seite 78 des Tunnelbodens 26 beweglich gelagert. Beim vorliegenden Ausführungsbeispiel sind die Abdeckelemente 78 hierzu um eine horizontale Schwenkachse 80 nach oben verschwenkbar gelagert, die parallel zur Längsrichtung der Behandlungseinrichtung 16 verläuft. In der Praxis sind die starren Abdeckelemente 76 aus Aluminium gefertigt. Es kommen aber auch andere Materialien mit einer ausreichenden Trittfestigkeit in Frage, die auch für die im Behandlungstunnel 20 im Betrieb herrschenden Bedingungen geeignet sein müssen, wie beispielsweise Edelstahl oder auch Kunststoffe.

Bei nicht eigens gezeigten Abwandlungen können die Abdeckelemente 76 auch flexibel sein, d.h. insbesondere biegbar sein, solange auch hierbei die erforderliche Trittfestigkeit in der Begehstellung sichergestellt ist. Insbesondere kann dann auf eine verschwenkbare Lagerung an der ersten Seite 78 des Tunnelbodens 26 verzichtet werden, wenn die dann an der ersten Seite 78 des Tunnelbodens 26 unbeweglich befestigten Abdeckelemente 76 nach oben verbiegbar sind. Gegebenenfalls kann ein plattenförmiges Abdeckelement 76 hierfür auch aus einzelnen, beweglich miteinander gekoppelten Gliederelementen gebildet sein, derart, dass ein solches Abdeckelement 76 aus einer horizontal ausgerichteten Begehstellung nach oben gebogen werden kann, in der Begehstellung aber trittfest ist. Auch flexible Abdeckelemente 76 können alternativ verschwenkbar an der ersten Seite 78 des Tunnelbodens 26 befestigt sein.

Bei einer weiteren nicht eigens gezeigten Abwandlung können die Abdeckelemente 76 auch um eine vertikale Schwenkachse verschwenkbar gelagert sein und aus der Begehstellung sich nicht nach oben, sondern sich in einer horizontalen Ebene in die Freigabestellung bewegen. Besonders in diesem Fall sind zwischen zwei aneinander angrenzenden Abdeckelementen 76 die oben angesprochenen Abstände bzw. Zwischenräume vorhanden, so dass ein solches Verschwenken möglich ist, ohne dass die Sicherheit von Personen gefährdet ist. Solche Abdeckelemente 76 werden vorzugsweise durch Federvorspannung in ihre Begehstellung gedrückt. Beispielsweise können Abdeckelemente 76 auch durch die Arme einer Art Drehkreuz ausgebildet sein, welches so gelagert ist, dass eine Strebe 58 der Verbindungseinrichtung 56 des Transportwagens 34 gegen einen Arm des Drehkreuzes anstößt und wegschiebt, so dass sich das Drehkreuz dreht und der folgende Arm des Drehkreuzes anstelle des angeschobenen Armes hinter der Strebe 58 des Transportwagens 34 zu liegen kommt. Hier kann in an und für sich bekannter Art ein Schnappmechanismus vorhanden sein, durch den ein solches Drehkreuz ohne äußere Krafteinwirkung in einer Position gehalten ist, in der einer der Arme den Verbindungsdurchgang 72 überbrückt.

Die Abdeckelemente 76 erstrecken sich in Längsrichtung der Behandlungskabine 20 in etwa zwischen 10 cm und 20 cm, vorzugsweise etwa 15 cm; dies definiert die Breite der Abdeckelemente 76. Deren Länge, d.h. deren Erstreckung quer zur Längsrichtung des Behandlungsraumes 19 zwischen dem Befestigungsende 76a und dem Auflageende 76b auf der Stützstruktur 82 beträgt etwa 15 cm bis 50 cm, vorzugsweise etwa 20 cm.

In weiterer Abwandlung von dem hier beschriebenen Ausführungsbeispiel kann es ausreichen, dass nur ein einziges Abdeckelement 76 im Behandlungsraum 19 vorhanden ist, an dessen Ort der Verbindungsdurchgang 72 dann sicher überquert werden kann. Ein solches Abdeckelement 76 hat dann eine ausreichende Erstreckung in Längsrichtung des Behandlungsraumes 19, um einen sicheren Übergang zu gewährleisten. Beispielsweise kann ein solches Abdeckelement 76 etwa 50 cm bis 100 cm breit sein. Es können auch zwei oder mehrere solcher Abdeckelemente 76 unter Einhaltung eines Abstandes vorhanden sein, so dass mehrere Übergänge durch jeweils ein Abdeckelement 76 in entsprechendem Abstand zueinander definiert sind. Ebenso können auch mehrere schmalere Abdeckelemente 76, die in der oben beschriebenen Art und Weise aneinander angrenzen, eine Abdeckelement-Gruppe bilden, die einen Übergang definieren, an dem der Verbindungsdurchgang überquert werden kann. Es können entsprechend auch mehrere solche Abdeckelement-Gruppen vorhanden sein.

Wie in den Figuren 3 und 4 zu erkennen ist, führen die Transportwagen 34 eine Verstelleinrichtung 86 mit sich, durch welche die Abdeckelemente 76 der Abdeckeinrichtung 74 von ihrer Begehstellung in ihre Freigabestellung bewegbar sind, wenn der Transportwagen 34 durch die Behandlungseinrichtung 16 bewegt wird. Dabei werden die Abdeckelemente 76 der Abdeckeinrichtung 74 am Ort und für die Dauer des Durchgangs der Verbindungseinrichtung 56, d.h. beim vorliegenden Ausführungsbeispiel konkret der Streben 58, durch den Verbindungsdurchgang 72 von ihrer Begehstellung in ihre Freigabestellung bewegt. In Figur 4 sind die Verstelleinrichtung 86 und zugehörige Komponenten nur bei dem ganz rechts gezeigten Förderwagen 34 mit Bezugszeichen versehen, wogegen die einzelnen Komponenten lediglich bei dem rechten Förderwagen 34 gekennzeichnet sind.

Die Verstelleinrichtung 86 umfasst an der Verbindungseinrichtung 56, d.h. vorliegend an den Streben 58, eine in Fahrtrichtung vorauseilende Verstellstruktur 88.

Die Verstellstruktur 88 ist derart angeordnet und dimensioniert, dass sie unterhalb der Abdeckelemente 76 einfädelt und diese soweit in ihre Freigabestellung nach oben drückt, so dass sich die Strebe 58 seitlich an dem Auflageende 76b des Abdeckelements 76 vorbeibewegen kann, wenn sich der Transportwagen 34 durch den Behandlungstunnel 20 bewegt. Bei den Streben 58 mit dem geneigten mittleren Abschnitt 60b bewegt sich dieser Abschnitt 60b an den Abdeckelementen 76 vorbei; diese zeigen die Figuren 1 und 2.

Zu jeder Verstellstruktur 88 gehört eine bezogen auf die Fahrtrichtung nacheilende Absenkstruktur 90, über welche die Ablageelemente 76 in einer homogenen Bewegung wieder zurück nach unten in die Begehstellung gleiten. Die Abdeckelemente 76 bewegen sich dabei durch die Schwerkraft nach unten. Alternativ können die Abdeckelemente 76 auch unter Federvorspannung stehen, durch welche die Abdeckelemente 76 in ihre Begehstellung in Richtung auf den Verbindungsdurchgang 76 bzw. die dortige Stützstruktur 82 gedrückt werden.

Beim vorliegenden Ausführungsbeispiel sind die Verstellstrukturen 88 als Verstellschwert 92 mit einer keilförmigen Geometrie ausgebildet, deren Schwertspitze in Förderrichtung des Transportwagens 34 weist. Die Absenkstrukturen 90 sind als entsprechende Absenkschwerter 94 mit analoger keilförmiger Geometrie ausgebildet, deren Schwertspitze in Richtung entgegen der Förderrichtung des Transportwagens 34 weist. Als keilförmige Geometrie ist vorliegend auch eine konusartige Struktur zu verstehen, wobei ein solcher Keil nicht rotationssymmetrisch sein muss.

Durch den Verbindungsdurchgang 72 kann einerseits die mit Schadstoffen, wie Lösemitteln und dergleichen, belastete Tunnelatmosphäre aus dem Behandlungstunnel 20 in den Fahrraum 64 strömen und andererseits Atmosphäre aus dem Fahrraum 64, die beispielsweise mit Abrieb oder Schmiermitteln der Fördertechnik in dem Fahrraum 64 belastet sein kann, in den Behandlungstunnel 20 gelangen. Um dies zu verhindern oder zumindest abzumildern, ist außerdem noch eine Abschirmeinrichtung 96 vorhanden.

Die Abschirmeinrichtung 96 umfasst beim vorliegenden Ausführungsbeispiel eine Schuppendichtung 98 bei welcher ein Vielzahl von Dichtlamellen 100 in Längsrichtung des Behandlungstunnels 20 überlappend so angeordnet sind, dass sie den Verbindungsdurchgang 72 des Tunnelbodens 26 abdecken. Die Dichtlamellen 100 sind in der Praxis aus einem biegbaren Blech oder einem temperaturbeständigen biegbaren Kunststoff gefertigt. Die Dichtlamellen 100 haben in der Praxis eine Breite, d.h. eine Erstreckung in Längsrichtung des Behandlungstunnels 20, von etwa 10 cm bis 20 cm, vorzugsweise von 15 cm, und haben Abmessungen, die zu denen der entsprechende dimensionierten Abdeckelemente 76 komplementär sind, wobei dieses nicht überlappend angeordnet sind.

Die Dichtlamellen 100 sind unter den Abdeckelementen 76 angeordnet und werden ebenfalls durch die Verstelleinrichtung 86 von dem Verbindungsdurchgang 72 nach oben wegbewegt, wenn der Transportwagen 34 sich durch die Behandlungseinrichtung 16 bewegt. Die Verstelleinrichtung 86 fädelt dabei folglich unterhalb der Dichtlamellen 100 ein, und drückt dann diese und darüber befindliche Abdeckelemente 76 nach oben, wie es insbesondere in Figur 2 zu erkennen ist.

Wenn der Transportwagen 34 in den Trockner 16 einfährt, gelangen die Gelenkstreben 58 also in den Verbindungsdurchgang 72, wobei die Verstelleinrichtung 86 die Dichtlamellen 96 und die Abdeckelemente 76 aus dem Weg drücken, so dass immer nur im Bereich der Gelenkstreben 58 ein entsprechendes Durchtrittsfenster für Atmosphäre des Behandlungsraumes 19 vorhanden ist.

Im Zusammenhang mit Dichtlamellen kennt der Fachmann den Jargonbegriff eines "Lamellenaufweisers". Derartige Lamellenaufweiser sind bekannt und werden verwendet, um die Lamellen von Schuppendichtungen insbesondere an dadurch abgedichteten Schlitzen zur Seite zu schieben. Die Verstelleinrichtung 86 ist im Grundsatz nach Art eines solchen Lamellenaufweisers ausgebildet.

Außerdem sind an den gegenüberliegenden Rändern des Tunnelbodens 26, die den Verbindungsdurchgang 72 flankieren, Längsdichtungen 102 in Form von Gummilippen 104 angeordnet. Die beiden Streben 58 eines Transportwagens 34 sind mit einer Verbindungsstrebe 106 miteinander verbunden, welche derart angeordnet und dimensioniert ist, dass sie bei der Bewegung des Transportwagens 34 durch den Behandlungstunnel 20 gegen die Längsdichtungen 102 anliegt. Hierdurch wird erreicht, dass es in Förderrichtung hinter einer Strebe 58 des Transportwagens 34 kein Durchtrittsfenster für Tunnelatmosphäre nach unten in den Fahrraum 64 gibt, obwohl die Dichtlamellen 100 der Schuppendichtung 98 und die Abdeckelemente 76 der Abdeckeinrichtung 74 den Verbindungsdurchgang 72 noch nicht wieder verschließen, solange sie sich noch auf der Absenkstruktur 90 abstützen und von dem Verbindungsdurchgang 72 abgehoben sind.

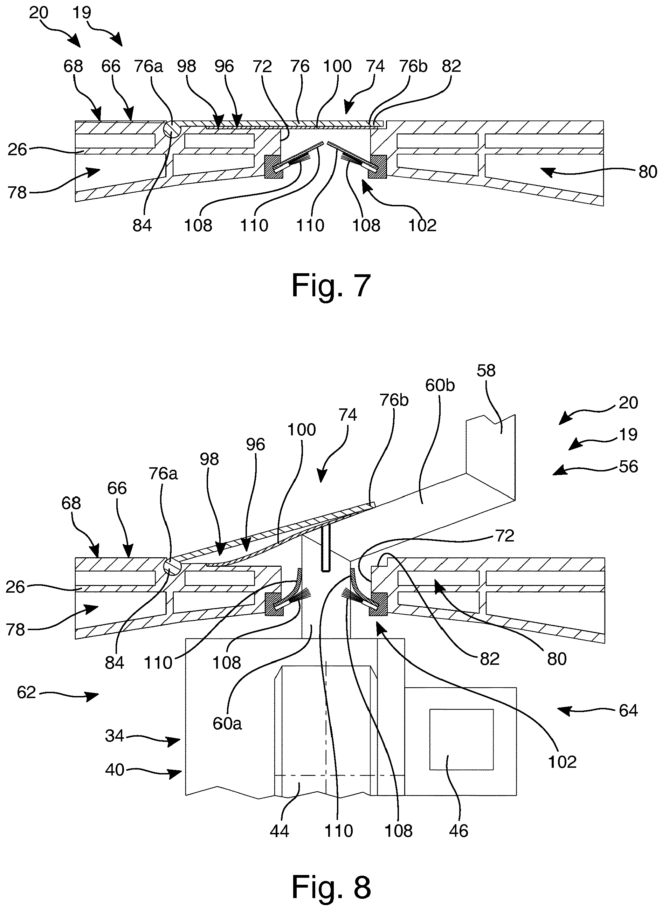

Die Figuren 7 und 8 veranschaulichen eine Abwandlung der Längsdichtungen 102. Diese umfassen an jedem der gegenüberliegenden Ränder des Tunnelbodens 26, die den Verbindungsdurchgang 72 flankieren, Längsbürsten 108, die in Längsrichtung auch aus Bürstensegmenten zusammengesetzt sein können. Durch die Längsbürsten 108 ist ein Staub- oder Partikelschutz ausgebildet.

Außerdem umfassen die Längsdichtungen 102 Längslamellen 110, von denen jeweils eine oberhalb der Längsbürsten 108 angeordnet ist. Beim vorliegenden Ausführungsbeispiel sind die Längslamellen 110 jeweils unmittelbar oberhalb der Längsbürsten 108 befestigt.

Sowohl die Längsbürsten 108 als auch die Längslamellen 110 sind beim vorliegenden Ausführungsbeispiel von den gegenüberliegenden Rändern des Verbindungsdurchganges 72 in Richtung nach innen gehend nach oben geneigt, wobei ein Neigungswinkel von etwa 45° vorliegt. Zwischen den freien Enden der Längslamellen 110 verbleibt nur ein geringer Abstand, im besten Fall kein Abstand, wodurch die Durchtrittsfläche einer Fluidverbindung zwischen dem Behandlungsraum 19 und dem darunter liegenden Führungsbereich 62 auch ohne im Fahrraum 54 befindlichen Transportwagen 34 kleiner ist als im Falle der Gummilippen 104.

Wenn es sich bei der Behandlungseinrichtung 16 beispielsweise um eine oben erläuterte Arbeitsstation 17 handelt, kann gegebenenfalls auf die Abschirmeinrichtung 96 einerseits und/oder die Längsdichtung 102 verzichtet werden, so dass der Verbindungsdurchgang 72 lediglich durch die Abdeckeinrichtung 74 zumindest bereichsweise abgedeckt wird.

## Patentansprüche

1. Behandlungsanlage zum Behandeln von Werkstücken (12), insbesondere zum Behandeln von Fahrzeugkarosserien (14), mit
a) einer Behandlungseinrichtung (16) mit einem Gehäuse (18), welches einen Behandlungsraum (19) mit einem Boden (26) definiert;
b) einem Fördersystem (32), welches eine Vielzahl von Transportwagen (34) umfasst, mittels denen die Werkstücke (12) durch den Behandlungsraum (19) förderbar sind, wobei jeder Transportwagen (34) ein Fahrwerk (40) und eine Befestigungseinrichtung (50) für zumindest ein Werkstück (12) umfasst, die mittels einer Verbindungseinrichtung (56) miteinander gekoppelt sind;
wobei
c) außerhalb des Behandlungsraumes (19) ein Fahrraum (64) für das Fahrwerk (40) vorhanden ist, der durch einen Verbindungsdurchgang (72) in Richtung nach oben mit dem Behandlungsraum (19) verbunden ist, derart, dass das Fahrwerk (40) in dem Fahrraum (64) bewegbar ist, wobei die Befestigungseinrichtung (50) im Behandlungsraum (20) mitgeführt wird und sich die Verbindungseinrichtung (56) durch den Verbindungsdurchgang (72) hindurch erstreckt,
**dadurch gekennzeichnet, dass**
d) im Behandlungsraum (20) eine Abdeckeinrichtung (74) vorhanden ist, die zumindest ein begehbares Abdeckelement (76) umfasst, welches zwischen einer Begehstellung, in welcher es den Verbindungsdurchgang (72) abdeckt, und einer Freigabestellung, in welcher es von der Verbindungseinrichtung (56) eines der Transportwagen (34) passiert werden kann, beweglich ist.

2. Behandlungsanlage nach Anspruch 1, **dadurch gekennzeichnet, dass** das begehbare Abdeckelement (76) flexibel und unbeweglich befestigt ist oder flexibel und beweglich gelagert ist oder starr und beweglich gelagert ist.

3. Behandlungsanlage nach Anspruch 2, **dadurch gekennzeichnet, dass** das Abdeckelement (76) um eine horizontale Schwenkachse (84) verschwenkbar gelagert ist.

4. Behandlungsanlage nach einem der Ansprüche 1 bis 3, **dadurch gekennzeichnet, dass** die Abdeckeinrichtung (74) mehrere Abdeckelemente (76) umfasst, die in Längsrichtung des Behandlungsraumes (19) aneinander angrenzend oder voneinander beabstandet angeordnet sind.

5. Behandlungsanlage nach einem der Ansprüche 1 bis 4, **dadurch gekennzeichnet, dass** mehrere aneinander angrenzende Abdeckelemente (76) eine Abdeckelement-Gruppe bilden.

6. Behandlungsanlage nach einem der Ansprüche 1 bis 5, **dadurch gekennzeichnet, dass** eines oder mehrere Abdeckelemente eine Erstreckung in Längsrichtung des Behandlungsraumes (19) von etwa 10 cm bis etwa 20 cm, vorzugsweise von etwa 15 cm, oder von etwa 50 cm bis etwa 100 cm haben.

7. Behandlungsanlage nach einem der Ansprüche 1 bis 6, **dadurch gekennzeichnet, dass** der Verbindungsdurchgang (72) geradlinig oder gewinkelt ist.

8. Behandlungsanlage nach einem der Ansprüche 1 bis 6, **dadurch gekennzeichnet, dass** die Verbindungseinrichtung (56) wenigstens eine Strebe (58) mit wenigstens einem Abschnitt (60a) umfasst, der zu dem Verbindungsdurchgang (72) komplementär ist.

9. Behandlungsanlage nach einem der Ansprüche 1 bis 8, **dadurch gekennzeichnet, dass** die Transportwagen (34) jeweils eine Verstelleinrichtung (86) mit sich führen, durch welche das oder die Abdeckelemente (76) der Abdeckeinrichtung (74) von ihrer Begehstellung in ihre Freigabestellung bewegbar sind, wenn der Transportwagen (34) durch die Behandlungseinrichtung (16) bewegt wird.

10. Behandlungsanlage nach Anspruch 9, **dadurch gekennzeichnet, dass** die Verstelleinrichtung (86) wenigstens eine Verstellstruktur (88) umfasst, welche der Verbindungseinrichtung (56) in Bewegungsrichtung des Transportwagens (34) vorauseilt.

11. Behandlungsanlage nach einem der Ansprüche 1 bis 10, **dadurch gekennzeichnet, dass** eine Abschirmeinrichtung (96) vorgesehen, durch welche ein Kontakt wenigstens der Fahrwerke (40) der Transportwagen (34) mit der Atmosphäre des Behandlungsraumes (19) durch den Verbindungsdurchgang (72) hindurch zumindest vermindert wird.

12. Behandlungsanlage nach Anspruch 11 unter Rückbezug auf Anspruch 9 oder 10, **dadurch gekennzeichnet, dass** die Abschirmeinrichtung (96) eine Vielzahl von überlappend angeordneten Dichtlamellen (100) umfasst, welche derart angeordnet und eingerichtet sind, dass sie durch die Verstelleinrichtung (86) nach oben gedrückt werden, wenn der Transportwagen (34) sich durch die Behandlungseinrichtung (16) bewegt.
